**Europäisches Patentamt**

**European Patent Office**

**Office européen des brevets**

(11) Veröffentlichungsnummer: **0 064 598**
**B1**

(12) **EUROPÄISCHE PATENTSCHRIFT**

(45) Veröffentlichungstag der Patentschrift:
16.01.85

(21) Anmeldenummer: **82102838.8**

(22) Anmeldetag: 02.04.82

(51) Int. Cl.⁴: **F 16 C 33/10**, F 16 C 17/03

(54) Lagersegment für ein hydrodynamisches Gleitlager.

(30) Priorität: 05.05.81 DE 3117746

(43) Veröffentlichungstag der Anmeldung:
17.11.82 Patentblatt 82/46

(45) Bekanntmachung des Hinweises auf die Patenterteilung:
16.01.85 Patentblatt 85/3

(84) Benannte Vertragsstaaten:
AT BE DE FR GB IT SE

(56) Entgegenhaltungen:
CH - A - 274 953
DE - A - 2 147 207
DE - A - 2 211 414
DE - A - 2 931 383
US - A - 3 352 610

VDI-BERICHTE, Nr. 111, 1966, Düsseldorf K. DROSTE
"Schmierungsgerechte Konstruktion" Seiten 15 bis 19

(73) Patentinhaber: Krupp Polysius AG,
Graf-Galen-Strasse 17, D-4720 Beckum (DE)

(72) Erfinder: Grothaus, Hubert, Ing. grad., Schulstrasse 9,
D-4505 Iburg-Glaue (DE)
Erfinder: Heiringhoff, Burkhard, Ing. grad.,
Von-Nagel-Strasse 10, D-4740 Oelde (DE)
Erfinder: Linzel, Leonhard, Ing. grad., Linzel 35,
D-4740 Oelde 4 (DE)
Erfinder: Schössler, Werner, Ing. grad.,
Zeppelinstrasse 22, D-4730 Ahlen (DE)
Erfinder: Heinemann, Otto, Ing. grad., Galileistrasse 8,
D-4722 Ennigerloh (DE)
Erfinder: Krumme, Helmut, Königstrasse 29,
D-4725 Liesborn (DE)
Erfinder: Lücke, Helmut, Ing. grad., Zum Igelsbusch 2,
D-4720 Beckum 2 (DE)

(74) Vertreter: Tetzner, Volkmar, Dr.-Ing. Dr. Jur.,
Van-Gogh-Strasse 3, D-8000 München 71 (DE)

## Beschreibung

Die Erfindung betrifft ein Lagersegment entsprechend dem Obergegriff des Anspruches 1.

Bekannt sind sowohl hydrostatisch als auch hydrodynamisch betriebene Lager. Beide Lagersysteme sind mit gewissen Vor- und Nachteilen behaftet.

So ist bei einem hydrostatischen Lager in der Regel die Ölversorgung und Überwachung recht aufwendig, und die Notlaufeigenschaften sind schlecht. Andererseits kann man ein hydrostatisches Lager mit hohen Flächenbelastungen betreiben, wobei sich auf der gesamten Lagerfläche eine annähernd gleichmässige Flächenbelastung ergibt. Die mittlere spezifische Flächenbelastung entspricht also etwa dem maximalen Druck auf der Lagerfläche.

Demgegenüber ist beim hydrodynamischen Lager die Ölversorgung und Überwachung wesentlich einfacher. Seine Notlaufeigenschaften, d.h. sein Verhalten bei plötzlichem Ausfall der Ölversorgung, sind infolge der glatten, durchlaufenden Lagerfläche weitaus besser als beim hydrostatischen Lager.

Andererseits entstehen bei hydrodynamischen Lagern bzw. deren tragenden Lagersegmenten — bedingt durch die Art des Druckaufbaues im hydrodynamischen Schmierkeil — enorme Spitzendrücke im sogenannten Druckberg. Die mittlere spezifische Flächenbelastung eines hydrodynamischen Lagers liegt weit unter diesem Spitzendruck. Ein hydrodynamisches Lager baut infolgedessen bei gleicher Belastung grösser als ein hydrostatisches Lager.

Ein Lagersegment entsprechend dem Oberbegriff des Anspruches 1 ist beispielsweise durch die DE-A Nr. 2931383 bekannt.

Der Erfindung liegt die Aufgabe zugrunde, ein Lagersegment der im Oberbegriff des Anspruches 1 vorausgesetzten Art so auszubilden, dass es sich durch eine hohe mittlere spezifische Flächenbelastung auszeichnet und eine besonders schmale Lagerbauweise gestattet.

Diese Aufgabe wird erfindungsgemäss durch die kennzeichnenden Merkmale des Anspruches 1 gelöst.

Die DE-Z „VDI-Berichte", Nr. 111, 1966, S. 15 bis 19, befasst sich mit der schmierungsgerechten Konstruktion von Radialgleitlagern, wobei insbesondere auf S. 19, Bild 15 IV, eine Ausführungsform veranschaulicht ist, bei der über den ganzen Umfang eines Radialgleitlagers mehrere axial verlaufende Quernuten vorgesehen sein können, die an ihren axialen Enden in Umfangsringnuten direkt übergehen. Dies bedeutet also, dass die Quernuten mit den an den axialen Lagerenden vorgesehenen Ringnuten in der Weise verbunden sind, dass das Öl von den Quernuten ohne irgendwelche Druckänderungen in die Ringnuten übertritt. Bei dieser bekannten Ausführung kann mehr Öl durch das Lager fliessen, wodurch eine bessere Kühlung erzielt wird. Eine Verbesserung der Tragfähigkeit eines hydrodynamischen Gleitlagers lässt sich jedoch durch die bekannte Ausführung nicht erzielen.

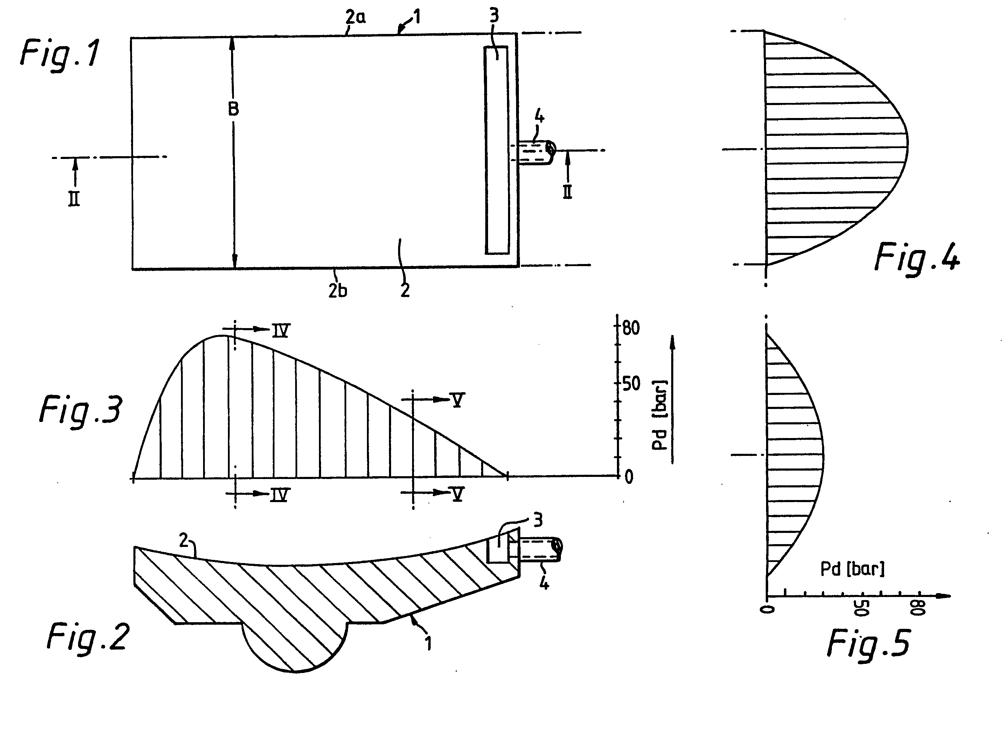

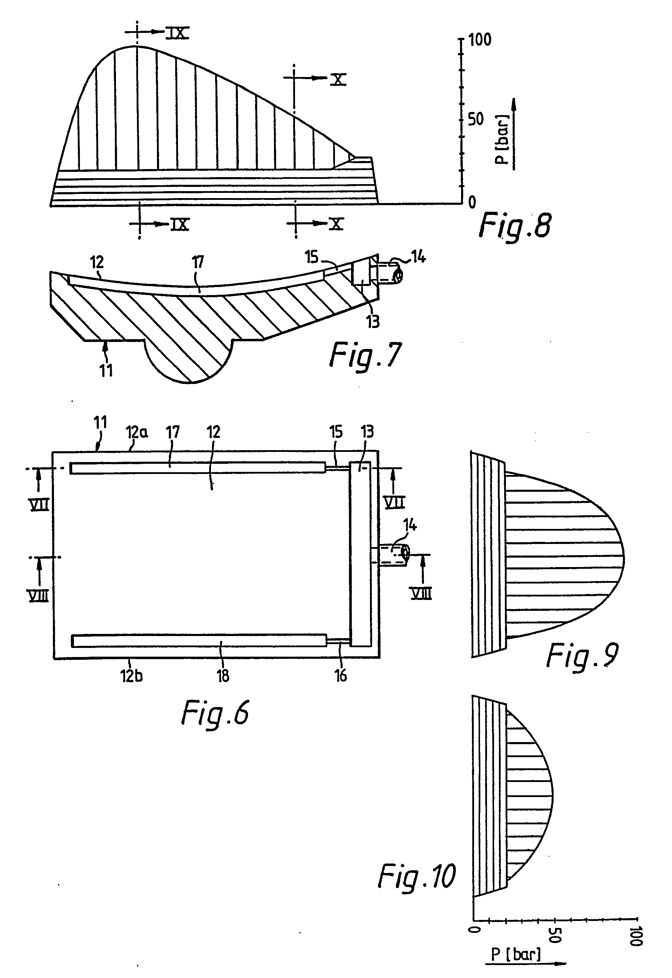

Zur näheren Erläuterung der Erfindung und der hierdurch erreichten Vorteile sei zunächst anhand der Fig. 1 bis 5 der im Oberbegriff des Anspruches 1 vorausgesetzte Stand der Technik beschrieben.

Fig. 1 zeigt eine Aufsicht auf ein Segment eines hydrodynamischen Radialgleitlagers und Fig. 2 einen Schnitt längs der Linie II der Fig. 1. Dieses Lagersegment 1 enthält in seiner Lagerfläche 2 auf der Zulaufseite des (nicht dargestellten) drehenden Elements eine Quernut 3, die an eine Schmieröl-Zuführleitung 4 angeschlossen ist und zur Verteilung des Schmieröles über die axiale Lagerbreite dient. Diese Quernut 3 speist in bekannter Weise den hydrodynamischen Schmierkeil, der sich im Betrieb zwischen der Lagerfläche 2 und dem drehenden Element ausbildet.

Fig. 3 veranschaulicht die Druckverteilung längs des Umfanges des Lagersegmentes 1, und zwar in der Schnittebene II-II (d.h. in der Lagermitte). Die Fig. 4 und 5 zeigen Querschnitte durch diesen Druckberg (längs der Linien IV-IV bzw. V-V der Fig. 3).

In der Quernut 3 baut sich — je nach den Spaltverhältnissen, der mechanischen Stabilität von Lagersegment 1 und drehendem Element sowie je nach der zugeführten Ölmenge — ein mehr oder weniger grosser statischer Druck auf. Das drehende Element zieht von dieser in der Quernut 3 vorhandenen Ölmenge so viel in den Spalt ein, wie zum Aufbau des hydrodynamischen Schmierkeiles erforderlich ist. Dieses Einziehen wird vom statischen Druck in der Quernut 3 unterstützt.

Das in den Spalt zwischen dem Lagersegment 1 und dem drehenden Element eingezogene Öl fliesst nun teilweise im Bereich der Längskanten 2a, 2b der Lagerfläche seitlich ab. Dieser sogenannte Seitenfluss ist unerwünscht, da er der Lagermitte Öl entzieht, wodurch der Druckaufbau spitzer, d.h. ungleichmässiger, und die Spalthöhe des Ölfilmes reduziert wird.

Es leuchtet ein, dass schmale Lager, d.h. Lager mit einer geringen axialen Breite B, gegen einen solchen Seitenfluss besonders empfindlich sind.

Die Fig. 6 bis 10 veranschaulichen demgegenüber die erfindungsgemässe Lösung. Hierbei zeigt Fig. 6 eine Aufsicht auf ein erfindungsgemässes Lagersegment, Fig. 7 einen Schnitt längs der Linie VII-VII der Fig. 6, während die Fig. 8, 9 und 10 Schnitte durch den Druckaufbau längs der Linien VIII-VIII, IX-IX bzw. X-X zeigen.

Das Lagersegement 11 enthält in seiner Lagerfläche 12 eine Quernut 13, die an eine Schmieröl-Zuführleitung 14 angeschlossen ist. Die beiden Enden dieser Quernut 13 sind über je eine Drossel 15, 16 an Längsnuten 17, 18 angeschlossen, die die Lagerfläche 12 in axialer Richtung, d.h. nahe der Längskanten 12a, 12b, begrenzen.

Die Fig. 8 bis 10 zeigen — im Vergleich zu den Fig. 3 bis 5 —, wie sich der Druckaufbau durch das Vorhandensein der beiden Längsnuten 17, 18 ändert. Bei dem der Darstellung zugrundegelegten Beispiel beträgt der Öldruck in der Quernut 3 ca. 24 bar und in den Längsnuten 17, 18 ca. 20 bar.

Der sich in dem Spalt zwischen dem Lagersegment 11 und dem drehenden Element im Betrieb ausbildende hydrodynamische Schmierkeil stützt sich infolgedessen an seinen beiden Flanken (d.h. im Bereich der Längsnuten 17, 18) gegen ein höheres Drucknivau als Atmosphäre ab. Dadurch wird der Seitenfluss wesentlich verringert und das Volumen des Druckkberges etwa um die in den Fig. 8 bis 10 quergestreifte Basis vergrössert. Dieser Vergrösserung des Volumens des Druckberges entspricht eine proportionale Vergrösserung der Tragkraft des Lagersegmentes.

Die erfindungsgemässe Lösung gestattet somit, entweder die Tragkraft des Lagers zu vergrössern und/oder das Lager schmaler zu bauen.

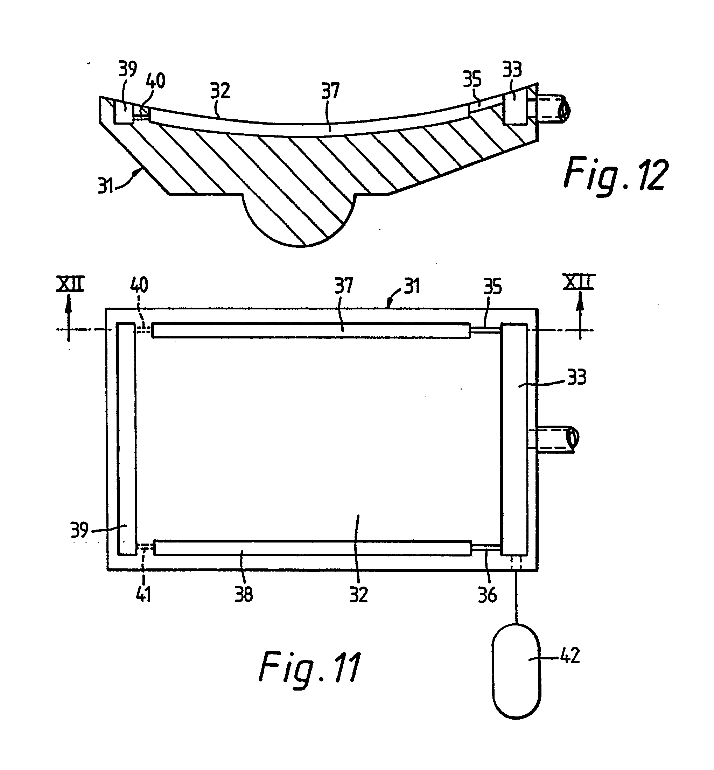

Die Fig. 11 und 12 zeigen ein weiteres Ausführungsbeispiel der Erfindung. Das Lagersegment 31 enthält in seiner Lagerfläche 32 ausser der auf der Zulaufseite des drehenden Elementes vorgesehenen Quernut 33 und den beiden über Drosseln 35, 36 angeschlossenen Längsnuten 37, 38 noch eine auf der Ablaufseite des drehenden Elementes vorgesehene Quernut 39, die über Drosseln 40, 41 an die Längsnuten 37, 38 angeschlossen ist.

Die Bemessung erfolgt zweckmässig so, dass die Drosseln 35, 36 im Normalbetrieb einen Druckabfall von 5 bis 30%, vorzugsweise von 10 bis 20%, bewirken, während die Drosseln 40, 41 einen Druckabfall von 70 bis 95%, vorzugsweise von 80 bis 90%, bewirken.

Die Ausführung gemäss den Fig. 11 und 12 ist besonders dann zweckmässig, wenn das drehende Element (beispielsweise eine Rohrmühle) zwar nur in einer Drehrichtung betrieben wird, beim Abstellen jedoch in der anderen Drehrichtung auspendelt. Für diesen Auspendelvorgang stellt dann die Quernut 39 das Ölreservoir dar, aus dem der hydrodynamische Schmierkeil gespeist wird. Der Anschluss dieser Quernut 39 an die Längsnuten 37, 38 über die Drosseln 40, 41 gewährleistet, dass sich in der Quernut 39 in jeder räumlichen Lage des Lagersegmentes 31 ein kleines Ölreservoir bildet, das beim Wechseln der Drehrichtung ein Trockenlaufen des Lagers für eine befristete Zeit verhindert.

An die Quernut 33 ist schliesslich noch ein Hydrospeicher 42 angeschlossen, der auch bei Ausfall der Hauptölversorgung einen gewissen Öldruck aufrechterhält.

Die bei dem erfindungsgemässen Lagesegment als Verbindung zwischen der Quernut und den beiden Längsnuten vorgesehenen Drosseln bilden Sicherheitsorgane, die im Falle ungünstiger Spaltverhältnisse einen unkontrollierten Abfluss des Schmieröles über die beiden Längsnuten verhindern. Zu beachten ist nämlich, dass insbesondere bei grossen Abmessungen des drehenden Elementes (etwa bei der Lagerung grosser Rohrmühlen) keineswegs immer mit idealen Spaltverhältnissen gerechnet werden kann, sondern dass Bearbeitungstoleranzen, mechanische Verformungen und temperaturbedingte Verformungen in Betracht gezogen werden müssen.

Der Speisedruck in der Quernut auf der Zulaufseite des drehenden Elementes sollte für grosse Lagersegmente, wie sie für die Lagerung von Rohrmühlen, Trommeln u. dgl. verwendet werden, zwischen 3 und 30 bar liegen. Die zu den Längsnuten führenden Drosseln werden so dimensioniert, dass der darin auftretende Druckverlust vorzugsweise zwischen 10 und 20% liegt.

Ausser den bereits genannten Vorteilen der erfindungsgemässen Lösung besteht ein weiterer Vorzug darin, dass auf die üblicherweise bei hydrodynamischen Lagern eingesetzte Anfahrhilfe verzichtet werden kann (eine solche Anfahrhilfe besteht bei grossen hydrodynamischen Lagern üblicherweise aus einer Mittelbohrung im Lagersegment, durch die vor dem Drehen durch Hochdrucköl die metallische Berührung zwischen Zapfen und Lager aufgehoben wird).

Vorteilhaft ist ferner, dass bei der erfindungsgemässen Lösung durch die wesentliche Verringerung des Seitenflusses mehr Öl gezielt durch das Lager gefördert werden kann, wodurch das Temperaturniveau im Lager gesenkt wird. Dadurch bleibt auch das Öl kälter und somit seine Viskosität und Tragfähigkeit höher, was das Gesamttragverhalten des Lagers begünstigt.

## Patentansprüche

1. Lagersegment für ein hydrodynamisches Gleitlager, mit einer in der Lagerfläche auf der Zulaufseite des drehenden Elementes vorgesehenen, zur Verteilung von Schmieröl über die Lagerbreite dienenden und einen hydrodynamischen Schmierkeil speisenden Quernut (13), dadurch gekennzeichnet, dass an die beiden Enden der Quernut (13) über je eine Drossel (15, 16) zwei Längsnuten (17, 18) angeschlossen sind, die die Lagerfläche (12) in Richtung der Lagerbreite begrenzen.

2. Lagersegment nach Anspruch 1, dadurch gekennzeichnet, dass die Lagerfläche (32) auch auf der Ablaufseite des drehenden Elementes eine Quernut (39) aufweist, deren Enden über je eine Drossel (40, 41) an die beiden Längsnuten (37, 38) angeschlossen sind.

3. Lagersegment nach Anspruch 1, dadurch gekennzeichnet, dass die Drosseln (15, 16) so dimensioniert sind, dass darin im Normalbetrieb ein Druckabfall von 5 bis 30%, vorzugsweise von 10 bis 20%, auftritt.

4. Lagersegment nach Anspruch 2, dadurch gekennzeichnet, dass die Drosseln (40, 41) so dimensioniert sind, dass darin im Normalbetrieb ein Druckabfall von 70 bis 95%, vorzugsweise von 80 bis 90%, auftritt.

5. Lagersegment nach Anspruch 1, dadurch gekennzeichnet, dass an die Quernut (33) ein Hydrospeicher (42) unmittelbar angeschlossen ist.

6. Lagersegment nach Anspruch 1, gekennzeichnet durch seine Ausbildung als Lagersegment eines Radialgleitlagers.

7. Lagersegment nach Anspruch 1, gekennzeichnet durch seine Ausbildung als Lagersegment eines Axialgleitlagers.

## Claims

1. Bearing segment for a hydrodynamic sliding bearing with a transverse groove (13) which is provided on the inlet side of the rotating element in the bearing surface and serves to distribute lubricating oil over the axial width of the bearing and supplies a hydrodynamic lubricating wedge, characterised in that two longitudinal grooves (17, 18) which define the bearing surface (12) in the axial direction are each connected *via* a throttle (15, 16) to the two ends of the transverse groove (13).

2. Bearing segment according to Claim 1, characterised in that the bearing surface (32) also has a transverse groove (39) on the outlet side of the rotating element, the ends of the said transverse groove being connected *via* throttles (40, 41) to the two longitudinal grooves (37, 38).

3. Bearing segment according to Claim 1, characterised in that the throttles (15, 16) are of such dimensions that in the normal operation a pressure drop of 5 to 30%, preferably 10 to 20%, occurs in them.

4. Bearing segment according to Claim 2, characterised in that the throttles (40, 41) are of such dimensions that in normal operation a pressure drop of 70 to 95%, preferably 80 to 90%, occurs in them.

5. Bearing segment according to Claim 1, characterised in that a reservoir (42) is directly connected to the transverse groove (33).

6. Bearing segment according to Claim 1, characterised in that it is constructed as the bearing segment of a radial sliding bearing.

7. Bearing segment according to Claim 1, characterised in that it is constructed as the bearing segment of an axial sliding bearing.

## Revendications

1. Patin de coussinet de palier hydrodynamique, comprenant dans la surface portante, du côté de l'entrée de l'élément rotatif, une gorge transversale (13) destinée à répartir l'huile de lubrification sur la largeur du coussinet et alimentant un film de lubrification hydrodynamique, caractérisé en ce que deux gorges longitudinales (17, 18), qui délimitent la surface portant (12) dans la direction de la largeur du coussinet, sont raccordées chacune à l'une des deux extrémités de la gorge transversale (13) par l'intermédiaire d'un étranglement (15, 16).

2. Patin de coussinet selon la revendication 1, caractérisé en ce que la surface portante (32) comporte aussi du côté de la sortie de l'élément rotatif une gorge transversale (39) dont chacune des extrémités est raccordée à l'une des deux gorges longitudinales (37, 38) par l'intermédiaire d'un étranglement (40, 41).

3. Patin de coussinet selon la revendication 1, caractérisé en ce que les étranglements (15, 16) sont dimensionnés de manière qu'il s'y produise en service normal une chute de pression de 5 à 30%, de préférence de 10 à 20%.

4. Patin de coussinet selon la revendication 2, caractérisé en ce que les étranglements (40, 41) sont dimensionnés de manière qu'il s'y produise en service normal une chute de pression de 70 à 95%, de préférence de 80 à 90%.

5. Patin de coussinet selon la revendication 1, caractérisé en ce qu'un accumulateur hydraulique (42) est raccordé directement à la gorge transversale (33).

6. Patin de coussinet selon la revendication 1, caractérisé par sa conformation en patin de coussinet d'un palier lisse ordinaire.

7. Patin de coussinet selon la revendication 1, caractérisé par sa conformation en patin de palier de butée.

Fig.1

2a   1   3

B

4

II                    II

2b   2

Fig.3                 IV

80

IV        V           60

Pd [bar]

50

IV        V           0

Fig.4

Fig.2                 3

2                     4

Fig.5

Pd [bar]

0   50   80

0 064 598

Fig.8

Fig.7

Fig.6

Fig.9

Fig.10

Fig.12

Fig.11